# NEUE EUROPÄISCHE PATENTSCHRIFT

(11) **EP 2 121 262 B2**
(45) Veröffentlichungstag und Bekanntmachung des Hinweises auf die Entscheidung über den Einspruch: **08.03.2017**
(45) Hinweis auf die Patenterteilung: 06.04.2011
(21) Anmeldenummer: 07819758.9
(22) Anmeldetag: 12.11.2007
(51) Int. Cl.: B29B 9/16, B29B 9/00, C08J 3/12

(54) **VERFAHREN UND VORRICHTUNG ZUR HERSTELLUNG UND BEHANDLUNG VON GRANULATKÖRNERN**
METHOD AND DEVICE FOR PRODUCING AND TREATING PELLETS
PROCÉDÉ ET DISPOSITIF DE PRODUCTION ET DE TRAITEMENT DE GRAINS DE GRANULÉS EN MATIÈRE PLASTIQUE

(30) Priorität: 12.12.2006 DE 102006058510
(43) Veröffentlichungstag der Anmeldung: 25.11.2009
(73) Patentinhaber: Polymetrix AG, 9245 Oberbüren (CH)
(72) Erfinder: GLÖCKNER, Frank, 63739 Aschaffenburg (DE); EUSEBIO, Fernando, 8592 Uttwil (CH); CULBERT, Brent Allan, 9500 Wil (CH); MORGANTI, Franziska, 8057 Zürich (CH)
(74) Vertreter: Hepp Wenger Ryffel AG
(86) Internationale Anmeldenummer: PCT/EP2007/009769
(87) Internationale Veröffentlichungsnummer: WO 2008/071278

(56) Entgegenhaltungen:
- WO-A-00/68294
- DE-A1- 1 905 677
- DE-A1-102004 050 356
- DE-A1-102005 010 706
- US-A- 4 570 783
- US-A1- 2005 056 961

## Beschreibung

Die Erfindung bezieht sich auf ein Verfahren und eine Vorrichtung zur Herstellung und Behandlung von Granulatkörnern aus Kunststoffmaterial.

Üblicherweise weisen solche Verfahren die Schritte auf des Granulierens einer Schmelze des Kunststoffmaterials zu Granulatkörner, des Kühlens der Granulatkörner in einem Kühlfluid, des Trennens der Granulatkörner von dem Kühlfluid und der Weiterbehandlung der Granulatkörner, insbesondere die Kristallisation der Granulatkörner.

Bei der Herstellung und Behandlung von Granulatkörnern aus Kunststoffmaterial, insbesondere von Granulatkömem aus Polymeren von thermoplastischen Polyestern oder Copolyestern, z.B. PET, welche gemäß dem Stand der Technik beispielsweise durch Unterwasserstranggranulierung oder Unterwassergranulierung herstellbar sind, ist es üblich, nach einer kurzen Verweilzeit des Granulats in einem Kühlfluid, dieses Kühlfluid möglichst schnell und effektiv von den Granulatkömem zu trennen und die Granulatkörner einer Kristallisationseinheit zur Durchführung der Kristallisation der Granulatkörner zuzuführen. Üblicherweise können Granulatkörner aus Kunststoffmaterial erst nach erfolgter Kristallisation zuverlässig weiterverarbeitet werden, da sie vor einer Kristallisation weitgehend amorphe Oberflächen aufweisen, so dass sie bei relativ hohen Temperaturen oberhalb der Glasübergangstemperatur des Materials zum Verkleben neigen, was die Weiterverarbeitbarkeit und die Handhabung solcher noch nicht kristallisierten bzw. zumindest an ihrer Oberfläche noch nicht kristallisierten Granulatkörner erschwert bzw. aufgrund ihres leichten Zusammenklebens unmöglich macht. Kommt es zu einer Störung bei der Kristallisation während des Verfahrens der Herstellung solcher Granulatkörner oder sogar zu einem Komplettausfall eines entsprechenden Kristallisators, so muss der gesamte Verfahrensablauf unterbrochen werden und die in der entsprechenden Vorrichtung vorhandene Schmelze bzw. bereits granulierte aber noch nicht kristallisierte Granulatkörner müssen dann aufwendig entsorgt werden, was eine kontinuierliche Produktion von Granulatkörnern erschwert bzw. unmöglich macht.

Die Patentanmeldung WO 00/68294 A1 offenbart ein Verfahren gemäß dem Oberbegriff des Anspruchs 1 und eine Vorrichtung gemäß dem Oberbegriff des Anspruchs 13.

Aus der deutschen Offenlegungsschrift DE 10 2005 010 706 A1 ist ein Verfahren zur thermischen Behandlung von Polyesterpellets bekannt, bei welchem eine Polyesterschmelze einem Unterwassergranulator zugeführt und granuliert wird und die Granulatkörner anschließend getrocknet und einem Kristallisationsschritt unterzogen werden, wobei eine zu einer Teilkristallisation der Granulatkörner führende Wärmebehandlung mittels der an den Granulaten vorhandenen Eigenwärme erfolgt. Nach der so erfolgten Kristallisation sind die kristallisierten Granulatkörner bereits zur Weiterverarbeitung geeignet und können über eine Granulatweiche einer zusätzlichen Nachbehandlungseinrichtung oder einem Silo zugeführt werden.

Es ist eine Aufgabe der vorliegenden Erfindung, ein Verfahren und eine Vorrichtung zur Herstellung und Behandlung von Granulatkörnern aus Kunststoffmaterial vorzusehen, welche(s) die Nachteile des Standes der Technik überwindet und insbesondere eine sichere und zuverlässige Erzeugung von Granulatkörnern auch bei auftretenden Störungen bei der Kristallisation ermöglicht.

Die Aufgabe wird erfindungsgemäß gelöst mit einem Verfahren mit den Merkmalen gemäß Anspruch 1 sowie mit einer Vorrichtung mit den Merkmalen gemäß Anspruch 13. Bevorzugte Ausführungsformen sind in den jeweiligen Unteransprüchen definiert.

Das erfindungsgemäße Verfahren zur Herstellung und Behandlung von Granulatkömem aus Kunststoffmaterial weist die folgenden Schritte auf:
- Granulieren einer Schmelze des Kunststoffmaterials zu Granulatkörnern;
- Kühlen der Granulatkörner in einem Kühlfluid;
- Trennen der Granulatkörner von dem Kühlfluid;
- Kristallisation der Granulatkörner.

Erfindungsgemäß wird bei diesem Verfahren eine Steuerungsvorrichtung vorgesehen, durch welche zumindest der Verfahrensschritt der Kristallisation überwacht wird und das Verfahren so gesteuert wird, dass im Fall einer Störung der Kristallisation die Granulatkörner nach dem Trennen der Granulatkörner von dem Kühlfluid über eine Abzweigevorrichtung einem Zwischenspeicher zugeführt werden und wenn die Störung nicht mehr vorliegt, die in dem Zwischenspeicher zwischengelagerten Granulatkörner zur Kristallisation zugeführt werden und kristallisiert werden.

Bei dem erfindungsgemäßen Verfahren ist also sichergestellt, dass die Herstellung und Behandlung der Granulatkörner zuverlässig auch bei auftretenden Störungen bei der Kristallisation ermöglicht wird. Erfindungsgemäß wird der Strom der Granulatkörner nach dem Trennen der Granulatkörner von dem Kühlfluid bei Auftreten einer Störung des Kristallisationsschritts so umgeleitet und gespeichert, dass, wenn die Störung nicht mehr vorliegt, die zwischengelagerten Granulatkörner aus dem Zwischenspeicher zur Kristallisation zugeführt werden und kristallisiert werden können.

Insgesamt ist es möglich, ein Verfahren zur Herstellung und Behandlung von Granulatkömem auf erfindungsgemäße Art zu realisieren, wobei selbst vor der Kristallisation bzw. bei Störungen im Kristallisationsschritt bzw. bei einem Ausfall des Kristallisationsschritts keine übermäßigen Mengen an Abfall anfallen und das erfindungsgemäße Verfahren nach der Beseitigung der Störung besonders einfach weitergeführt werden kann.

Besonders effektiv ist das erfindungsgemäße Verfahren bei der Herstellung und Behandlung von Granulatkömem aus Kunststoffmaterial, wobei es sich bei dem Kunststoffmaterial bevorzugt um ein kristallisierbares, thermoplastisches Polykondensat, wie zum Beispiel Polyamid, Polyester, Polycarbonat, Polylactid, Polyhydroxyalkanoat oder deren Copolymere oder Mischungen, insbesondere Polyethylenterephthalat oder eines seiner Copolymere handelt.

Bei dem erfindungsgemäßen Verfahren kann durch die Steuerungsvorrichtung die Temperatur des Kühlfluids im Fall der Störung der Kristallisation auf eine Temperatur T₂ < T₁ abgesenkt werden, wobei die Temperatur T₁ eine ursprüngliche Temperatur des Kühlfluids im Fall keiner Störung der Kristallisation ist. Bevorzugt kann die Temperatur des Kühlfluids so abgesenkt werden auf eine solche Temperatur T₂, dass die sich in dem Kühlfluid befindenden Granulatkörner so gekühlt werden, dass die Temperatur der nach dem Trennschritt im Zwischenspeicher zugeführten Granulatkörner in einem Bereich liegt, dass diese zumindest an ihrer Oberfläche nicht verkleben.

Die Granulatkörner können also bei geeigneter Wahl der Temperaturen, insbesondere bei geeignet tiefen Temperaturen, besonders einfach und zuverlässig ohne zu verkleben in dem Zwischenspeicher zwischengelagert werden, wobei die noch nicht kristallisierten Granulatkörner dort zumindest an ihrer Oberfläche eine amorphe Struktur aufweisen können.

Bevorzugt ist eine Temperatureinstellung, wobei durch die Steuervorrichtung im Fall der Störung der Kristallisation die durchschnittliche Temperatur der Granulatkörner von einer Temperatur T₃ auf eine Temperatur T₄ < T₃, abgesenkt wird, wobei die Temperatur T₃ einer durchschnittlichen Granulattemperatur vor der Kristallisation im Fall keiner Störung der Kristallisation entspricht, und wobei die Temperatur T₄ einer durchschnittlichen Granulattemperatur vor dem Zwischenspeicher entspricht und T₄ in einem Bereich liegt, in dem die Granulate im Zwischenspeicher nicht verkleben. Somit ist die sichere und zuverlässige Erzeugung von Granulatkörnern mit dem solchermaßen erfindungsgemäß ausgeführte Verfahren in besonderer Weise sichergestellt, da besonders zuverlässig eine Verklebung der in den Zwischenspeicher umgeleiteten Granulatkörner vermieden werden kann.

Durch die Steuervorrichtung kann im Fall der Störung der Kristallisation die durchschnittliche Temperatur der Granulatkörner nach dem Trennen der Granulatkörner vom Kühlfluid von einer Temperatur T₃ auf eine Temperatur T₄ < T₃ abgesenkt werden, wobei die Temperatur T₃ in einem Bereich liegt, in dem die Granulate im Zwischenspeicher verkleben, und die Temperatur T₄ in einem Bereich liegt, in dem die Granulate im Zwischenspeicher nicht verkleben.

Die Temperatur T₄ kann unterhalb der Glasübergangstemperatur des Kunststoffmaterials liegen, bevorzugt unter 80°C liegen, bevorzugter unter 60°C liegen.

Die Temperatur T₃ kann oberhalb der Glasübergangstemperatur des Kunststoffmaterials liegen, bevorzugt über 80°C liegen, bevorzugter über 100°C liegen.

Durch die Steuervorrichtung kann im Fall der Behebung der Störung der Kristallisation die durchschnittliche Temperatur der Granulatkörner von einer Temperatur T₄ auf eine Temperatur T₅ > T₄ angehoben werden, wobei die Temperatur T₅ einer durchschnittlichen Granulattemperatur vor der Kristallisation im Fall keiner Störung der Kristallisation entspricht, bevorzugt und im Wesentlichen der Temperatur T₃ entspricht.

Somit kann der Ablauf des erfindungsgemäßen Verfahrens ohne Verkleben der Granulatkörner fortgeführt werden, wodurch eine sichere und zuverlässige Erzeugung der Granulatkörner erfindungsgemäß besonders gewährleistet ist, insbesondere nach dem Ausfall der Kristallisation, wenn die Kristallisation dann wieder "normal" arbeitet.

Bei dem erfindungsgemäßen Verfahren kann das Absenken und/oder Anheben der Granulattemperatur durch Anheben oder Absenken der Temperatur zumindest eines Teiles des Kühlfluides erfolgen.

Bei dem erfindungsgemäßen Verfahren kann das Absenken und/oder Anheben der Granulattemperatur auch durch Anheben oder Absenken der Kontaktzeit mit zumindest einem Teil des Kühlfluides erfolgen.

Erfindungsgemäß bevorzugt ist es bei dem Verfahren, dass, wenn die Störung nicht mehr vorliegt, die in dem Zwischenspeicher zwischengelagerten Granulatkörner zur Kristallisation so zugeführt werden, dass sie weiteren Granulatkörner zugemischt werden, welche dann entsprechend dem störungsfreien Verfahrensablauf der Kristallisation zugeführt werden, in einer Menge von bis zu 20 % eines Gesamtmassestroms der zur Kristallisation zugeführten Granulatkörner, bevorzugt in einer Menge von bis zu 10 % eines Gesamtmassenstroms der zur Kristallisation zugeführten Granulatkörner, bevorzugter in einer Menge von 5 % bis 10 % eines Gesamtmassenstroms der zur Kristallisation zugeführten Granulatkörner. Es wird also nach und nach die in den Zwischenspeicher zwischengelagerte Menge an Granulatkörner wieder in den "normalen" Verfahrensablauf nach dem Trennen der Granulatkörner von dem Kühlfluid und vor der Kristallisation der Granulatkörner zugeführt.

Neben der Zuführung der zwischengelagerten Granulatkörner nach und nach ist es auch möglich, dass erfindungsgemäß bevorzugt bei dem Verfahren, wenn die Störung nicht mehr vorliegt, zunächst alle in dem Zwischenspeicher zwischengelagerten Granulatkörner zur Kristallisation zugeführt werden, bevor dann weitere Granulatkörner entsprechend dem störungsfreien Verfahrensablauf der Kristallisation zugeführt werden.

Sowohl das Zuführen der zwischengelagerten Granulatkörner nach und nach, als auch das Zuführen aller Granulatkörner, wenn die Störung der Kristallisation nicht mehr vorliegt, zu dem Kristallisationsschritt ermöglicht es gemäß dem erfindungsgemäßen Verfahren bevorzugt eine sichere und zuverlässige Erzeugung von Granulatkömem, welche auch nicht durch Verkleben den Verfahrensablauf behindern, zu ermöglichen, selbst wenn zwischenzeitlich der Kristallisationsschritt gestört sein sollte.

Die erfindungsgemäße Vorrichtung zur Herstellung und Behandlung von Granulatkörnern aus Kunststoffmaterial weist auf eine Granulationsvorrichtung zum Granulieren einer Schmelze des Kunststoffmaterial zu Granulatkörner, wobei die granulierten Granulatkörner mit einem Kühlfluid kühlbar sind, bevorzugt in einer Kühlvorrichtung zum Kühlen der Granulatkörner in dem Kühlfluid, wobei die Granulatkörner nach der Granulierung bevorzugt in dem Kühlfluid geführt werden, eine Trennvorrichtung zum Trennen der Granulatkörner von dem Kühlfluid und eine Kristallisationsvorrichtung zur Kristallisation der Granulatkörner. Die erfindungsgemäße Vorrichtung weist ferner eine zwischen der Trennvorrichtung und der Kristallisationsvorrichtung angeordnete Abzweigevorrichtung auf, welche mit einem Zwischenspeicher für die durch die Abzweigevorrichtung abgezweigten Granulatkörner in Verbindung steht. Die Abzweigevorrichtung ist über eine Steuerungsvorrichtung, durch welche zumindest die Kristallisationsvorrichtung überwachbar ist, so steuerbar, dass im Fall einer Störung der Kristallisationsvorrichtung die Granulatkörner dem Zwischenspeicher zuführbar sind und wenn die Störung nicht mehr vorliegt, die in dem Zwischenspeicher zwischengelagerten Granulatkörner der Kristallisationsvorrichtung zuführbar sind. Die Zuführung zu und von dem Zwischenspeicher kann dabei durch Transport beispielsweise einem Luftstrom oder durch mechanischen Transport in Form von Schnecken, Fördereinrichtungen bekannter Art oder ähnlichem erfindungsgemäß erfolgen. Durch die erfindungsgemäße Vorrichtung ist es möglich, bei der Herstellung und Behandlung von Granulatkörner aus Kunststoffmaterial auch bei Ausfall einer Kristallisationsvorrichtung bzw. eines Kristallisators eine sichere und zuverlässige Erzeugung der Granulatkörner zu ermöglichen.

Erfindungsgemäß bevorzugt ist es, wenn die Abzweigevorrichtung so gestaltet ist, dass über die Abzweigevorrichtung die in dem Zwischenspeicher zwischengelagerten Granulatkörner der Kristallisationsvorrichtung zuführbar sind. Die Granulatkörner nehmen also über die entsprechend gestaltete Abzweigevorrichtung den gleichen Weg in den Zwischenspeicher und aus dem Zwischenspeicher heraus. Diese ermöglicht es, eine besonders einfache und auch kostengünstige Gestaltung der erfindungsgemäßen Vorrichtung zu realisieren.

Ansonsten sind mit der erfindungsgemäßen Vorrichtung die im Zusammenhang mit dem erfindungsgemäßen Verfahren beschriebenen Vorteile und Merkmale realisierbar. Die Beschreibung im Zusammenhang mit dem erfindungsgemäßen Verfahren gilt, soweit anwendbar, sinngemäß auch für die erfindungsgemäße Vorrichtung. Insbesondere kann die erfindungsgemäße Vorrichtung das erfindungsgemäße Verfahren ausführen.

Eine Funktionsmatrix, welche beispielhaft das erfindungsgemäße Verfahren veranschaulicht, ist in Tabelle 1 gezeigt.

**Tabelle 1:**

| | Kühlfluid-temperatur | Kristallisationsvorrichtung | Zwischenspeicher | Abfallbehälter(optional) | Abzweige vorrichtung |
|---|---|---|---|---|---|
| Normalbetrieb | ≥80°C | in Betrieb 100% | leer | leer | Von der Trennvorrichtung zur Kristallisationsvorrichtung |
| Herunterfahren | absenken auf ≤60°C | auf Störung | leer | wird gefüllt | Zum Abfallbehälter |
| Speicherbetrieb | ≤60°C | in Wartung | wird gefüllt | entleeren | Zum Zwischenspeicher |
| Hochfahren | anheben auf ≥80°C | in Bereitschaft | ist gefüllt | wird gefüllt | Zum Abfallbehälter |
| Rückspeisebetrieb | ≥80°C | in Betrieb >100% | wird entleert | entleeren | Zur Kristallisationsvorrichtung aus dem Zwischenspeicher bis zu 20% zuspeisen |
| Normalbetrieb | wie oben | | | | |

Die Erfindung wird im Folgenden anhand nicht beschränkender beispielhafter bevorzugter Ausführungsformen davon unter Bezugnahme auf die beigefügte Figuren näher erläutert werden. Es zeigt:
Figur 1 eine schematische Ansicht einer Vorrichtung zur Herstellung und Behandlung von Granulatkörnem aus Kunststoffmaterial gemäß einer Ausführungsform der Erfindung;
Figur 2 eine schematische Ansicht einer Vorrichtung zur Herstellung und Behandlung von Granulatkörnern aus Kunststoffmaterial gemäß einer weiteren Ausführungsform der Erfindung;
Figur 3 eine schematische Ansicht einer Vorrichtung zur Herstellung und Behandlung von Granulatkörnern aus Kunststoffinaterial gemäß einer weiteren Ausführungsform der Erfindung; und
Figur 4 eine schematische Ansicht einer Vorrichtung zur Herstellung und Behandlung von Granulatkörnern aus Kunststoffmaterial gemäß noch einer weiteren Ausführungsform der Erfindung.

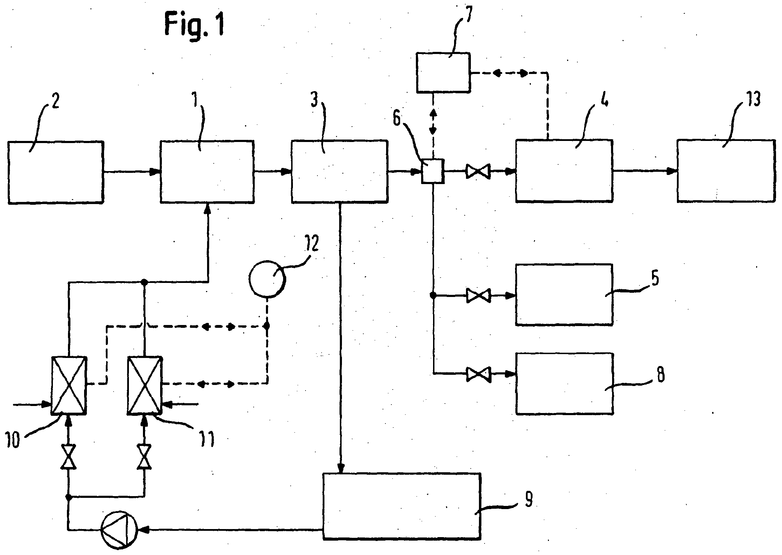

Die Figur 1 zeigt schematisch einen Aufbau einer erfindungsgemäßen Vorrichtung zur Herstellung und Behandlung von Granulatkörnern aus Kunststoffmaterial gemäß einer Ausführungsform der Erfindung, wobei durch die durchgehenden Pfeile der Lauf des Kunststoffmaterials bzw. der Granulatkörner sowie der Lauf des Kühlfluids angegeben sind. Die erfindungsgemäße Vorrichtung besteht gemäß Figur 1 aus einer Granulationsvorrichtung 1 zum Granulieren einer Schmelze des Kunststoffmaterials zu Granulatkörnern, wobei die Schmelze des Kunststoffmaterials von einem Reaktor oder Extruder 2 zur Granulationsvorrichtung 1 zugeführt wird. Nach dem Granulationsschritt in der Granulationsvorrichtung 1 werden die granulierten Granulatkörner mit einem Kühlfluid gekühlt , bevorzugt in einer Kühlvorrichtung zum Kühlen der Granulatkörner in dem Kühlfluid, wobei bevorzugt die Granulatkörner von der Granulationsvorrichtung 1 weg in dem Kühlfluid transportiert werden. Als Kühlfluid kommen bevorzugt Kühlwasser oder geeignete Gase zum Einsatz. Das Kühlfluid mit den Granulatkörnern gelangt zu einer Trennvorrichtung 3 zum Trennen der Granulatkörner von dem Kühlfluid, d.h. die Granulatkörner werden von dem Kühlfluid getrennt und entsprechend getrocknet. Als Trennvorrichtung 3 kann eine allgemein bekannte Abscheidevorrichtung vorgesehen sein, z.B. ein Zentrifugaltrockner. Solche Vorrichtungen sind dem Fachmann allgemein geläufig und werden daher hier nicht näher beschrieben werden. Nach der Trennvorrichtung 3 werden die Granulatkörner im Normalbetrieb der erfindungsgemäßen Vorrichtung (d.h. wenn keine Störung einer Kristallisationsvorrichtung 4 vorliegt) der Kriställisationsvorrichtung 4 bzw. dem Kristallisator 4 zur Kristallisation der Granulatkörner zugeführt. Gegebenenfalls kann nach der Kristallisation der Granulatkörner in dem Kristallisator noch ein Festphasen(poly)kondensationsschritt in einer entsprechenden Kondensationsvorrichtung 13 durchgeführt werden.

Ein Kühlfluidkreislauf ist gemäß Figur 1 vorgesehen, wobei von der Trennvorrichtung 3 das abgetrennte Kühlfluid über einen Vorratstank 9 und über Filter und Pumpen sowie geeignete Ventile jeweils wärmetauschern 10 und/oder 11 zugeführt wird, über welche je nach Erfordernis eine Aufheizung, oder eine Kühlung des Kühlfluids erfolgen kann, wie dies durch die Pfeile in Figur 1 angedeutet ist. Das so gekühlte oder aufgeheizte Kühlfluid wird dann (wieder) der Granulationsvorrichtung 1 zugeführt. Die Steuerung des Kühlfluidkreislaufs erfolgt dabei über eine Kühlfluidkreislauf-/temperatursteuerung 12, welche insbesondere die Temperaturen des Kühlfluids steuert und/oder überwacht, wie dies durch die gestrichelten Linien in Figur 1 angedeutet ist.

Erfindungsgemäß ist bei der Vorrichtung der Figur 1 zwischen der Trennvorrichtung 3 und der Kristallisationsvorrichtung 4 eine Abzweigevorrichtung 6 angeordnet, welche über Ventile mit einem Zwischenspeicher 5 in Verbindung steht. Die Temperatur in dem Zwischenspeicher 5 ist bevorzugt so gewählt, dass ein Verkleben der Granulatkörner, welche dort zwischengespeichert sind und ja noch nicht kristallisiert sind, vermieden werden kann, d.h. die Temperatur liegt bevorzugt unterhalb der Glasübergangstemperatur des Kunststoffmaterials, aus welchem die Granulatkörner hergestellt werden. Zusätzlich kann neben dem Zwischenspeicher 5 ein Abfallspeicher 8 vorgesehen sein, welcher nicht mehr weiter zu verwendende Granulatkörner aufnehmen kann.

Erfindungsgemäß ist die zwischen der Trennvorrichtung 3 und der Kristallisationsvorrichtung 4 angeordnete Abzweigevorrichtung 6, welche mit dem Zwischenspeicher 5 und dem Abfallspeicher 8 in Verbindung steht, über eine Steuerungsvorrichtung 7, durch welche zumindest auch die Kristallisationsvorrichtung 4 überwachbar ist, so steuerbar, dass im Fall einer Störung der Kristallisationsvorrichtung 4 die Granulatkörner dem Zwischenspeicher 5 zuführbar sind und wenn die Störung nicht mehr vorliegt, die in dem Zwischenspeicher 5 zwischengelagerten Granulatkörner der Kristallisationsvorrichtung 4 zuführbar sind. Dabei sind die in dem Zwischenspeicher 5 zwischengelagerten Granulatkörner, wenn eine Störung nicht mehr vorliegt, der Kristallisationsvorrichtung 4 über die entsprechend gestaltete Abzweigevorrichtung 6 oder direkt (wieder) zuführbar. Insbesondere kann somit die Abzweigevorrichtung 6 gleichzeitig als kombinierte Rückführvorrichtung ausgeführt sein, welche durch die Steuerungsvorrichtung 7 (aktiv) regel- und steuerbar sein kann. Die Zuführung/Abführung der Granulatkörner zu und von dem Zwischenspeicher kann dabei durch Transport beispielsweise einem Luftstrom oder durch mechanischen Transport in Form von Schnecken, Fördereinrichtungen bekannter Art oder ähnlichem erfindungsgemäß erfolgen.

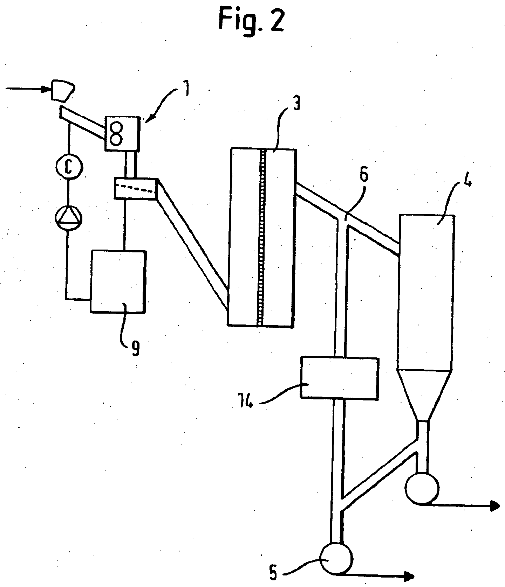

Mit der in Figur 1 (wie auch mit den in den Figuren 2 bis 4) schematisch gezeigten erfindungsgemäßen Vorrichtung(en) kann auch das weiter oben beschriebene erfindungsgemäße Verfahren, insbesondere auch mit seinen bevorzugten Ausführungsformen, durchgerührt werden.

Generell bezeichnen in den Figuren gleiche Bezugszeichen die gleichen Elemente der Erfindung.

Die Figuren 2 bis 4 zeigen eine Granulationsvorrichtung als Element bevorzugter Ausführungsformen der erfindungsgemäßen Vorrichtung zur Herstellung und Behandlung von Granulatkörnern. Die in den Figuren 2 bis 4 gezeigten Ausfiihrungsformen weisen auf die Granulationsvorrichtung 1, die Trennvorrichtung 3 für eine Kühlfluid-Abtrennung und einen Heisswasserkreislauf (Tank, Start-up Erhitzer, Pumpe, Kühler). Nach der Trennvorrichtung 3 folgt die Kristallisationsvorrichtung 4. Optional (in den Figuren nicht gezeigt) kann noch ein Übergrössenabscheider zwischen der Granulationsvorrichtung 1 und der Trennvorrichtung 3 vorgesehen sein.

In den Figuren 2 bis 4 ist durch die Pfeile nach der Kristallisationsvorrichtung 4 und dem Zwischenspeicher 5 allgemein angedeutet, dass von dort jeweils auch eine Weiterförderung der Granulatkörner zu einer Kondensationsvorrichtung 13 (SSP) erfolgen kann, wobei insbesondere der Zwischenspeicher 5 als back-up dienen kann.

Die Figur 2 zeigt eine schematische Ansicht einer Vorrichtung zur Herstellung und Behandlung von Granulatkörnern aus Kunststoffmaterial gemäß einer weiteren Ausführungsform der Erfindung. Dabei weist die in Figur 2 gezeigte Ausführungsform eine zusätzliche Kühlvorrichtung 14 zwischen der Abzweigevorrichtung 6 und dem Zwischenspeicher 5 auf, um eine Einstellung der gewünschten Temperaturen zu gewährleisten, um ein Verkleben der abgezweigten Granulatkörner auch beim Auftreten einer Störung der Kristallisation besonders zuverlässig zu vermeiden und einen kontinuierlichen Betrieb zu gewährleisten. Die Kühlvorrichtung 14 kann gas- oder flüssigkeitsbetrieben sein.

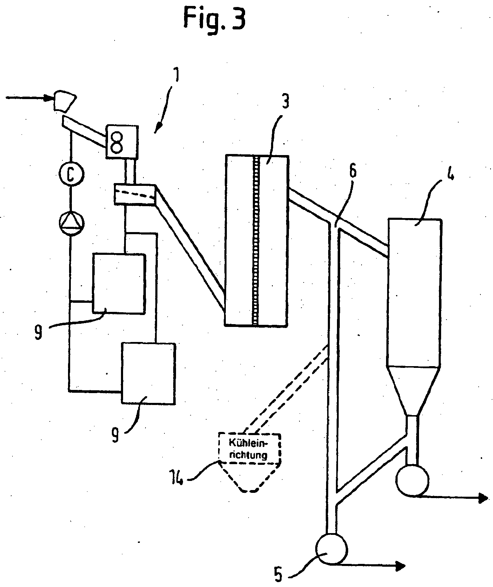

Die in Figur 3 schematisch gezeigte weitere Ausführungsform der Erfindung unterscheidet sich von der in Figur 2 gezeigten Ausführungsform im wesentlichen dadurch, dass gemäß der Ausführungsform der Figur 3 zusätzlich die Möglichkeit besteht, den Kreislauf des Kühlfuids von einem Heißwasserkreislauf auf Kaltwasserbetrieb umzustellen. Separate Vorratstanks 9 für Heißwasser und Kaltwasser erlauben dabei eine rasche Umstellung. Bei der Umstellung von Heißwasserkreislauf auf Kaltvasserbetrieb sollten Granulatkörner während der Übergangsphase entweder gar nicht erzeugt werden (durch kurze Unterbrechung der Granulation), oder es sollte während der Umstellung eine entsprechende (zusätzliche) Kühlung "off-line" erfolgen oder die erzeugten Granulatkörner sollten während der Umstellung über einen Förderer an sich bekannter Art einer Kühlvorrichtung zugeführt werden, wobei auch der Förderer selber als Kühlvorrichtung wirken kann.

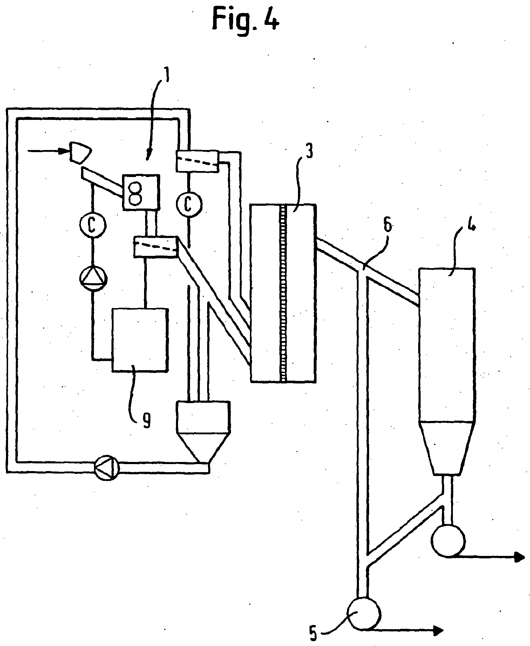

Die in Figur 4 schematisch gezeigte weitere Ausführungsform der Erfindung unterscheidet sich von den in den Figuren 2 und 3 gezeigten Ausführungsformen im wesentlichen dadurch, dass gemäß der Ausführungsform der Figur 4 eine zusätzliche Umschaltung vorgesehen zwischen einer Wasserabtrennung und der Trennvorrichtung 3, was eine alternative Fahrweise der Anlage über einen zusätzlichen Kaltwasserkreislauf erlaubt.

## Patentansprüche

1. Verfahren zur Herstellung und Behandlung von Granulatkörner aus Kunststoffinaterial, die Schritte aufweisend:
- Granulieren einer Schmelze des Kunststoffmaterials zu Granulatkömem;
- Kühlen der Granulatkörner in einem Kühlfluid;
- Trennen der Granulatkörner von dem Kühlfluid;
- Kristallisation der Granulatkörner; wobei
eine Steuerungsvorrichtung vorgesehen wird, durch welche zumindest der Verfahrensschritt der Kristallisation überwacht wird **dadurch gekennzeichnet, dass** das Verfahren so gesteuert wird, dass im Fall einer Störung der Kristallisation die Granulatkörner nach dem Trennen der Granulatkörner von dem Kühlfluid über eine Abzweigevorrichtung (6) einem Zwischenspeicher (5) zugeführtwerden und wenn die Störung nicht mehr vorliegt, die in dem Zwischenspeicher (5) zwischengelagerten Granulatkörner zur Kristallisation zugeführt werden und kristallisiert werden.

2. Verfahren nach Anspruch 1, **dadurch gekennzeichnet, dass** es sich bei dem Kunststoffmaterial um ein kristallisierbares, thermoplastisches Polykondensat, wie zum Beispiel Polyamid, Polyester, Polycarbonat, Polylactid, Polyhydroxyalkanoat oder deren Copolymere oder Mischungen, insbesondere Polyethylenterephthalat oder eines seiner Copolymere handelt.

3. Verfahren nach Anspruch 1 oder 2, **dadurch gekennzeichnet, dass** durch die Steuerungsvorrichtung im Fall der Störung der Kristallisation die Temperatur des Kühlfluids auf eine Temperatur T₂ < T₁ abgesenkt wird, wobei die Temperatur T₁ eine ursprüngliche Temperatur des Kühlfluids im Fall keiner Störung der Kristallisation ist, bevorzugt so abgesenkt wird, dass die sich in dem Kühlfluid befindenden Granulatkörner so gekühlt werden, dass die Temperatur der nach dem Trennschritt dem Zwischenspeicher (5) zugeführten Granulatkörner in einem Bereich liegt, dass diese zumindest an ihrer Oberfläche nicht verkleben.

4. Verfahren nach einem der Ansprüche 1 bis 3, **dadurch gekennzeichnet, dass** durch die Steuervorrichtung im Fall der Störung der Kristallisation die durchschnittliche Temperatur der Granulatkörner von einer Temperatur T₃ auf eine Temperatur T₄ < T₃ abgesenkt wird, wobei die Temperatur T₃ einer durchschnittlichen Granulattemperatur vor der Kristallisation im Fall keiner Störung der Kristallisation entspricht, und wobei die Temperatur T₄ einer durchschnittlichen Granulattemperatur vor dem Zwischenspeicher (5) entspricht und T₄ in einem Bereich liegt, in dem die Granulate im Zwischenspeicher (5) nicht verkleben.

5. Verfahren nach einem der Ansprüche 1 bis 3, **dadurch gekennzeichnet, dass** durch die Steuervorrichtung im Fall der Störung der Kristallisation die durchschnittliche Temperatur der Granulatkörner nach dem Trennen der Granulatkörner vom Kühlfluid von einer Temperatur T₃ auf eine Temperatur T₄ < T₃ abgesenkt wird, wobei die Temperatur T₃ in einem Bereich liegt, in dem die Granulate im Zwischenspeicher (5) erkleben, und die Temperatur T₄ in einem Bereich liegt, in dem die Granulate im Zwischenspeicher (5) nicht verkleben.

6. Verfahren nach Anspruch 4 oder 5, **dadurch gekennzeichnet, dass** die Temperatur T₄ unterhalb der Glasübergangstemperatur des Kunststoffmaterials liegt, bevorzugt unter 80°C liegt, bevorzugter unter 60°C liegt.

7. Verfahren nach Anspruch 4 **dadurch gekennzeichnet, dass** die Temperatur T₃ oberhalb der Glasübergangstemperatur des Kunststoffmaterials liegt, bevorzugt über 80°C liegt, bevorzugter über 100°C liegt.

8. Verfahren nach einem der Ansprüche 1 bis 7, **dadurch gekennzeichnet, dass** durch die Steuervorrichtung im Fall der Behebung der Störung der Kristallisation die durchschnittliche Temperatur der Granulatkörner von einer Temperatur T₄ auf eine Temperatur T₅ > T₄ angehoben wird, wobei die Temperatur T₅ einer durchschnittlichen Granulattemperatur vor der Kristallisation im Fall keiner Störung der Kristallisation entspricht, bevorzugt und im Wesentlichen der Temperatur T₃ entspricht.

9. Verfahren nach einem der Ansprüche 1 bis 8 **dadurch gekennzeichnet, dass** das Absenken und/oder Anheben der Granulattemperatur durch Anheben oder Absenken der Temperatur zumindest eines Teiles des Kühlfluides erfolgt.

10. Verfahren nach einem der Ansprüche 1 bis 9 **dadurch gekennzeichnet, dass** das Absenken und/oder Anheben der Granulattemperatur durch Anheben oder Absenken der Kontaktzeit mit zumindest einem Teil des Kühlfluides erfolgt.

11. Verfahren nach einem der Ansprüche 1 bis 10, **dadurch gekennzeichnet, dass** wenn die Störung nicht mehr vorliegt, die in dem Zwischenspeicher (5) zwischengelagerten Granulatkörner zur Kristallisation so zugeführt werden, dass sie weiteren Granulatkörnern zugemischt werden, welche dann entsprechend dem störungsfreien Verfahrensablauf der Kristallisation zugeführt werden, in einer Menge von bis zu 20% eines Gesamtmassenstroms der zur Kristallisation zugeführten Granulatkörner, bevorzugt in einer Menge von bis zu 10% eines Gesamtmassenstroms der zur Kristallisation zugeführten Granulatkörner, bevorzugter in einer Menge von 5% - 10% eines Gesamtmassenstroms der zur Kristallisation zugeführten Granulatkörner.

12. Verfahren nach einem der Ansprüche 1 bis 10, **dadurch gekennzeichnet, dass**, wenn die Störung nicht mehr vorliegt, zunächst alle in dem Zwischenspeicher (5) zwischengelagerten Granulatkörner zur Kristallisation zugeführt werden, bevor dann weitere Granulatkörnern entsprechend dem störungsfreien Verfahrensablauf der Kristallisation zugeführt werden.

13. Vorrichtung zur Herstellung und Behandlung von Granulatkörnern aus Kunststoffmaterial, aufweisend eine Granulationsvorrichtung (1) zum Granulieren einer Schmelze des Kunststoffmaterials zu Granulatkörnern, wobei die granulierten Granulatkörner mit einem Kühlfluid kühlbar sind, eine Trennvorrichtung (3) zum Trennen der Granulatkörner von dem Kühlfluid und eine Kristallisationsvorrichtung (4) zur Kristallisation der Granulatkörner wobei eine Steuerungsvorrichtung (7) vorgesehen ist, durch welche zumindest die Kristallisationsvorrichtung (4) über wachbar ist **dadurch gekennzeichnet, dass** zwischen der Trennvorrichtung (3) und der Kristallisationsvorrichtung (4) eine mit einem Zwischenspeicher (5) in Verbindung stehende Abzweigevorrichtung (6) angeordnet ist, welche über die Steuerungsvorrichtung (7), so steuerbar ist, dass im Fall einer Störung der Kristallisationsvorrichtung (4) die Granulatkörner dem Zwischenspeicher (5) zuführbar sind und wenn die Störung nicht mehr vorliegt, die in dem Zwischenspeicher (5) zwischengelagerten Granulatkörner der Kristallisationsvorrichtung (4) zuführbar sind.

14. Vorrichtung nach Anspruch 13, **dadurch gekennzeichnet, dass** über die Abzweigevorrichtung (6) die in dem Zwischenspeicher (5) zwischengelagerten Granulatkörner der Kristallisationsvorrichtung (4) zuführbar sind.

## Claims

1. A method for producing and treating pellets made of a plastic material, comprising:
granulating a melt of the plastic material to form pellets;
cooling the pellets in a cooling fluid;
separating the pellets from the cooling fluid;
crystallizing the pellets;
wherein a control unit is provided by which at least the method step of crystallization is monitored,
**characterized in that**
the method is controlled in such a manner that, in case of a disturbance in crystallization of the pellets, the pellets are supplied via a diverting device (6) to an intermediate storage (5) after separation of the pellets from the cooling fluid and, once the disturbance has been removed, the pellets temporarily stored in the intermediate storage (5) are supplied to a crystallization device and are crystallized.

2. The method according to claim 1, **characterized in that** t the plastic material is a crystallisable, thermoplastic condensation polymer, such as polyamide, polyester, polycarbonate, polyactide, polyhydroxyalkanoate, or copolymers or compounds thereof, in particular polyethylene terephthalate or copolymers thereof.

3. The method according to claim 1 or 2, **characterized in that** the control unit decreases a temperature of the cooling fluid from a temperature T₁ to a temperature T₂<T₁ in the case of a disturbance in crystallization of the pellets, the temperature T₁ being an original temperature of the cooling fluid in the case of no disturbance in crystallization of the pellets, wherein the temperature of the cooling fluid is decreased in such a manner that the pellets present in the cooling fluid are cooled such that the temperature of the pellets supplied to the intermediate storage (5) following the separation step lies within a range in which the pellets do not stick together.

4. The method according to any of the claims 1 to 3, **characterized in that** the control unit decreases an average temperature of the pellets from a temperature T₃ to a temperature T₄<T₃ in the case of a disturbance in crystallization of the pellets, the temperature T₃ corresponding to an average temperature of the pellets prior to crystallization in the case of no disturbance in crystallization of the pellets, and the temperature T₄ corresponding to an average temperature of the pellets prior to the intermediate storage (5), and T₄ lying within a range in which the pellets do no stick together in the intermediate storage (5).

5. The method according any of the claims 1 to 3, **characterized in that**, if a disturbance in crystallization of the pellets occurs, the control unit decreases an average temperature of the pellets from a temperature T₃ to a temperature T₄<T₃ after separation of the pellets from the cooling fluid, the temperature T₃ lying within a range in which the pellets stick together in the intermediate storage (5) and the temperature T₄ lying within a range in which the pellets do not stick together in the intermediate storage (5).

6. The method according to claim 4 or 5, **characterized in that** the temperature T₄ lies below a glass transition temperature of the plastic material, preferably below 80°C, more preferably below 60 °C.

7. The method according to claim 4, **characterized in that** the temperature T₃ lies above the glass transition temperature of the plastic material preferably above 80°C, more preferably above 60 °C.

8. The method according to any of the claims 1 to 7, **characterized in that**, if the disturbance in crystallization of the pellets is removed, the control unit increases an average temperature of the pellets from a temperature T₄ to a temperature T₅>T₄, the temperature T₅ corresponding to an average temperature of the pellets prior to crystallization in the case of no disturbance in crystallization of the pellets, essentially corresponding to the temperature T₃.

9. The method according to any of the claims 1 to 8, **characterized in that** a pellet temperature is decreased and/or increased by increasing or decreasing a temperature of at least a portion of the cooling fluid.

10. The method according to any of the claims 1 to 9, **characterized in that** a pellet temperature is decreased and/or increased by increasing or decreasing a contact time with at least a portion of the cooling fluid.

11. The method according to any of the claims 1 to 10, **characterized in that**, once the disturbance has been removed, the pellets temporarily stored in the intermediate storage (5) are supplied to crystallization in such a manner that the pellets temporarily stored are mixed with additional pellets and then supplied to the crystallization device according to a fault-free process, in a quantity of up to 20% of a total mass flow of pellets supplied to the crystallization device, preferably, in a quantity of up to 10% of a total mass flow of pellets supplied to the crystallization device, ,ore preferably, in a quantity of 5% - 10% of a total mass flow of pellets supplied to the crystallization device.

12. The method according to any of the claims 1 to 10, **characterized in that**, once the disturbance has been removed, all pellets temporarily stored in the intermediate storage (5) are first supplied to the crystallization device, and additional pellets are subsequently supplied to the crystallization device according to a fault-free process.

13. A device for producing and treating pellets made of plastic material, comprising a granulation device (1) for granulating a melt of the plastic material to form pellets, the pellets being coolable in a cooling fluid, and a separation device (3) for separating the pellets from the cooling fluid, and a crystallization device (4) for crystallizing the pellets, wherein a control unit (7) is provided by which at least the crystallization device may be monitored, **characterized in that** a diverting device (6) which is connected to an intermediate storage (5) is situated between the separation device (3) and the crystallization device (4) which diverting device is controllable by the control unit (7) such that, in the case of a disturbance of the crystallization device (4), the pellets may be supplied to the intermediate storage (5) and, once the disturbance has been removed, the pellets temporarily stored in the intermediate storage (5) may be supplied to the crystallization device (4).

14. The device according to claim 13, **characterized in that** the pellets temporarily stored in the intermediate storage (5) may be supplied to the crystallization device via the diverting device.

## Revendications

1. Procédé de production et de traitement de grains de granulés en matière plastique, comprenant les étapes suivantes :
- Granulation d'une masse fondue de matière plastique en grains de granulés ;
- Refroidissement des grains de granulés dans un fluide réfrigérant ;
- Séparation des grains de granulés du fluide réfrigérant ;
- Cristallisation des grains de granulés ;
un dispositif de commande étant prévu, au moyen duquel au moins la cristallisation (4) est contrôlée. Le procédé est commandé de façon qu'en cas de perturbation de la cristallisation, les grains de granulés sont amenés avec un dispositif de dérivation (6) à un réservoir intermédiaire (5), après séparation desdits grains de granulés du fluide réfrigérant, et en ce que, dans le cas où la perturbation n'a plus lieu, les grains de granulés entreposés dans le réservoir intermédiaire (5) sont amenés à la cristallisation et cristallisés.

2. Procédé selon la revendication 1, **caractérisé en ce qu'**il s'agit d'un polycondensat en thermoplastique cristallisable, tels que par exemple le polyamide, le polyester, le polycarbonate, le polylactide, le polyhydroxyalkanoate, ou leurs copolymères ou mélanges, en particulier le polyéthylène téréphtalate ou un de ses copolymères.

3. Procédé selon la revendication 1 ou 2, **caractérisé en ce que**, en cas de perturbation de la cristallisation, la température du fluide réfrigérant est abaissée à une température T2 < T1 grâce au dispositif de commande, la température T1 étant une température initiale du fluide réfrigérant dans le cas où aucune perturbation de la cristallisation n'a lieu, de préférence abaissée de sorte que les grains de granulés se trouvant dans le fluide réfrigérant sont refroidis de sorte à ce que la température des grains de granulés amenés au réservoir intermédiaire (5) après l'étape de séparation se trouve dans une zone permettant au moins que ceux-ci ne collent pas en surface.

4. Procédé selon l'une des revendications 1 à 3, caractérisé en qu'en cas de perturbation de la cristallisation, la température initiale des grains de granulé est abaissée d'une température T3 à une température T4 < T3 grâce à un dispositif de commande, la température T3 correspondant à une température initiale moyenne avant la cristallisation dans le cas où il n'y aurait pas de perturbation de la cristallisation et la température T4 correspondant à une température moyenne de granulation avant le réservoir intermédiaire(5) et T4 se situant dans une zone où les grains de granulés ne collent pas au réservoir intermédiaire (5).

5. Procédé selon l'une des revendications 1 à 3, **caractérisé en ce qu'**en cas de perturbation de la cristallisation, la température moyenne des grains de granulés est abaissée au moyen du dispositif de commande d'une température T3 à une température T4 < T3 après la séparation des grains du fluide réfrigérant, la température T3 se situant dans une zone où les grains de granulés collent au réservoir intermédiaire (5) et la température T4 se situant dans une zone dans lesquels les grains de granulés ne collent pas réservoir intermédiaire (5).

6. Procédé selon la revendication 4 ou 5, **caractérisé en ce que** la température T4 est inférieure à la température de vitrification de la matière plastique, de préférence inférieure à 80°C, ou mieux, inférieure à 60°C.

7. Procédé selon la revendication 4, **caractérisé en ce que** la température T3 est supérieure à la température de vitrification de la matière plastique, de préférence supérieure à 80°C, ou mieux, supérieure à 100°C.

8. Procédé selon l'une des revendications 1 à 7, **caractérisé en ce qu'**en cas de réparation de la perturbation de la cristallisation, la température moyenne des grains de granulés est augmentée d'une température T4 à une température T5 > T4 grâce au dispositif de commande, la température T5 correspondant à une température moyenne des grains de granulés avant la cristallisation dans le cas où aucune perturbation de la cristallisation n'aurait lieu, correspondant de préférence et pour l'essentiel à la température T3.

9. Procédé selon l'une des revendications 1 à 8, **caractérisé en ce que** l'abaissement ou l'augmentation de la température des granulés se fait par abaissement ou augmentation de la température d'une partie au moins du fluide réfrigérant.

10. Procédé selon l'une des revendications 1 à 9, **caractérisé en ce que** l'abaissement et/ ou l'augmentation de la température des granulés survient e, augmentant ou en abaissant le temps de contact avec au moins une partie du fluide de refroidissement.

11. Procédé selon l'une des revendications 1 à 10, caractérisé en que, dans le cas où la perturbation n'a plus lieu, les grains de granulés entreposés dans le réservoir intermédiaire (5), sont amenés à la cristallisation de sorte qu'ils soient mélangés aux autres grains de granulés, lesquels sont amenés conformément à une procédure de cristallisation sans perturbation dans une quantité allant jusqu'à 20 % de l'écoulement de la masse totale des grains de granulés amenés à la cristallisation, de préférence dans une quantité allant jusqu'à 10 % de l'écoulement de la masse totale des grains de granulés amenés à la cristallisation, ou mieux, dans une quantité allant de 5 à 10 % d'un écoulement de la masse totale des grains de granulés amenés à la cristallisation.

12. Procédé selon l'une des revendications 1 à 10, **caractérisé en ce que**, dans le cas où la perturbation n'a plus lieu, tous les grains de granulés entreposés dans le réservoir intermédiaire (5) sont tout d'abord amenés à la cristallisation, avant que d'autres grains de granulés soient amenés ensuite conformément à la procédure de cristallisation sans perturbation.

13. Dispositif de production et de traitement des grains de granulés en matière plastique, présentant un dispositif de granulation (1) d'une masse fondue de matière plastique en granulés, les granulés étant refroidis dans un fluide réfrigérant, un dispositif de séparation (3) pour séparer les grains de granulés du fluide réfrigérant et un dispositif de cristallisation (4) pour cristalliser les grains de granulés, un dispositif de commande (7) étant prévu, au moyen duquel au moins le dispositif de cristallisation (4) est contrôlé, **caractérisé en ce qu'**un dispositif de dérivation connecté avec un réservoir intermédiaire (5) est disposé entre le dispositif de séparation (3) et le dispositif de cristallisation (4), le dit dispositif de commande (7) étant contrôlable de sorte qu'en cas de perturbation du dispositif de cristallisation (4), les granulés sont amenés au réservoir intermédiaire (5) et si la perturbation n'a plus lieu, les grains de granulés entreposés dans le réservoir intermédiaire (5) sont amenés au dispositif de cristallisation (4).

14. Dispositif selon la revendication 13, **caractérisé en ce que** les grains de granulés entreposés dans le réservoir intermédiaire (5) sont amenés au dispositif de cristallisation par le dispositif de dérivation (6).
